# EUROPEAN PATENT APPLICATION

(11) **EP 3 835 643 A1**
(43) Date of publication of application: **16.06.2021**
(21) Application number: 19214961.5
(22) Date of filing: 10.12.2019
(51) Int. Cl.: F16N 29/02, F16C 29/02, F16C 17/24, B23Q 11/12

(54) **LUBRICATION ARRANGEMENT FOR LUBRICATING A LINEAR GUIDING DEVICE**

(71) Applicant: Güdel Group AG c/o Güdel AG, 4900 Langenthal (CH)
(72) Inventor: Truttmann, Urs, 5033 Buchs (CH)
(74) Representative: Keller Schneider Patent- und Markenanwälte AG (Bern)

(57) **Abstract**

The invention relates to a lubrication arrangement (1) for lubricating a linear guiding device (100), the linear guiding device (100) comprising a track (101) and a carriage (102). The lubrication arrangement (1) includes a lubricant nozzle (1) for lubricating the track (101) with a lubricant, and a control unit (3) for controlling a lubrication of the track (101) with the lubricant by regulating a flow of the lubricant from the lubricant nozzle (2). Furthermore, the lubrication arrangement (1) includes a position determination module (4) for repeatedly determining a current position of the carriage (102) relatively to the track (101), wherein the current position of the carriage (102) relatively to the track (101) is taken into account by the control unit (3) for controlling the lubrication of the track (101). The invention relates to a linear guiding device (100) with such a lubrication arrangement (1) and a method for lubricating such a linear guiding device (100).

## Description

### Technical Field

The invention relates to a lubrication arrangement for lubricating a linear guiding device, the linear guiding device comprising a track and a carriage, wherein the lubrication arrangement includes a lubricant nozzle for lubricating the track with a lubricant and a control unit for controlling a lubrication of the track with the lubricant by regulating a flow of the lubricant from the lubricant nozzle. Furthermore, the invention relates to a linear guiding device with such a lubrication arrangement and a method for lubricating such a linear guiding device.

### Background Art

Linear guiding devices including a lubrication arrangement for lubricating the respective linear guiding device that pertain to the technical field initially mentioned are known. Likewise, methods for lubricating linear guiding devices pertaining to the technical field initially mentioned are known, too. One example of such a linear guiding device with a lubrication arrangement and a corresponding method for lubricating this linear guiding device are described in EP 0 030 694 A1 of the International Business Machines Corporation. In this linear guiding device, elements made from an electrically conducting material are gliding on each other when the linear guiding device is operated. Thereby, the gliding of these elements is assisted by lubrication. In order to control the lubrication, a resistivity is measured between the elements across the lubricant. In case the resistivity exceeds a preset threshold value, more lubricant is dispensed onto the surfaces of the elements which glide on each other.

Such a linear guiding device has the drawback that the measured resistivity does not reliably indicate the amount of lubricant between the elements of the respective linear guiding device because the resistivity strongly depends on the air humidity, the temperature and the distribution of the lubricant. Thus, in order to ensure proper lubrication of the linear guiding device, the threshold value for the resistivity has to be set very low. Due to the low threshold value, often too much lubricant is dispensed onto the surfaces of the elements which glide on each other. Consequently, an unnecessary amount of lubricant is used which results in a wastage of lubricant and in a spilling of excess lubricant to places where no lubricant should get to.

Another example of a linear guiding device with a lubrication arrangement and a corresponding method for lubricating this linear guiding device pertaining to the technical field initially mentioned are described in US 2012/0037457 A1 of Hiwin Technologies Corp. In this linear guiding device, a time required by the movable parts in the linear guiding device for reaching a threshold speed is determined when the respective parts are moved. Based on this time, the lubrication state of the device is determined and depending on the lubrication state, the device is lubricated.

This example has the drawback that in case stronger actuators are used for actuating the respective linear guiding device, the dependence of the time required by the movable parts for reaching the threshold speed on the lubrication is very small. Thus, the lubrication state cannot be determined precisely. Consequently, in these linear guiding devices, lubrication has to be regulated very generously, such that an unnecessary amount of lubricant is used which results in a wastage of lubricant and in a spilling of excess lubricant to places where no lubricant should get to.

### Summary of the invention

It is the object of the invention to create a lubrication arrangement for lubricating a linear guiding device pertaining to the technical field initially mentioned, that enable a well appropriate lubrication of the respective linear guiding device without wastage of lubricant and in a spilling of excess lubricant to places where no lubricant should get. Furthermore, it is object of the invention to create a linear guiding device with such a lubrication arrangement and a method for lubricating such a linear guiding device.

The solution of the invention is specified by the features of claim 1. According to the invention, the lubrication arrangement includes a position determination module for repeatedly determining a current position of the carriage relatively to the track, wherein the current position of the carriage relatively to the track is taken into account by the control unit for controlling the lubrication of the track.

According to the invention, the lubrication arrangement includes a lubricant nozzle for lubricating the track with a lubricant. Thus, the lubricant nozzle is suitable for dispensing the lubricant directly or indirectly to the track. Thereby, the shape and design of the lubricant nozzle is irrelevant. For example, the lubricant nozzle can be an open end of a tube or any other orifice, a valve, a spray valve, a jet nozzle or any other nozzle. In case the carriage comprises a wheel or a pinion running on the track or on a toothed rack of the track, respectively, then the lubricant nozzle can for example dispense the lubricant on the wheel or pinion and thus dispense the lubricant indirectly to the track. Or, the lubricant nozzle can for example dispense the lubricant directly to the track or the toothed rack. In another example, the lubricant nozzle is a lubrication wheel or a lubrication pinion running on the track or the toothed rack of the track, respectively. In this example, the lubrication wheel or lubrication pinion can for example be made of a porous foam material releasing lubricant when running on the track. In this example, the lubrication wheel or lubrication pinion may comprise a feed line for supplying the lubrication wheel or lubrication pinion, respectively, with lubricant. This feed line may for example lead through an axle of the lubrication wheel or lubrication pinion.

Independent of the shape and design of the lubricant nozzle, the lubricant nozzle is advantageously fluidly connectable to a lubricant reservoir for being supplied with lubricant from the lubricant reservoir with lubricant for lubricating the track. In a first preferred variant, the lubrication arrangement includes the lubricant reservoir, the lubricant reservoir being fluidly connected to the lubricant nozzle for supplying the lubricant nozzle with lubricant. In a second preferred variant, the lubricant nozzle provides a connector for being connected to a tube and thus a feed line for receiving lubricant from a lubricant reservoir via the tube. Thereby, the lubricant reservoir is not part of the lubrication arrangement. In either of the two variants, the lubricant reservoir may be arranged on the carriage of the linear guiding device, on the track of the linear guiding device or somewhere else. Furthermore, in either of the two variants, in operation, the lubricant nozzle is preferably connected to the lubricant reservoir by a lubricant feedline for supplying the lubricant to the lubricant nozzle.

According to the invention, the lubrication arrangement comprises a control unit for controlling the lubrication of the track with the lubricant by regulating the flow of the lubricant from the lubricant nozzle. Thereby, regulating the flow of the lubricant from the lubricant nozzle preferably includes at least controlled, repeated starting and stopping of the flow of the lubricant from the lubricant nozzle. In a variant, regulating the flow of the lubricant from the lubricant nozzle additionally includes regulating an amount of lubricant flowing in the flow of the lubricant from the lubricant nozzle per time unit. In either case, the regulation of the flow of the lubricant from the lubricant nozzle may be controlled by a valve in the lubricant nozzle, by a valve somewhere upstream of the lubricant nozzle in the lubricant feedline or by a pump arranged upstream of the lubricant nozzle in the lubricant feedline for pumping lubricant through the lubricant nozzle.

According to the invention, the lubrication arrangement includes a position determination module for repeatedly determining a current position of the carriage relatively to the track. In a first variant, this position determination module is included in the control unit. In a second variant, the position determination module is a separate unit. In a third variant, the position determination module is included in another module or unit of the lubrication arrangement, wherein this another module or unit provides an additional function different to the position determination modules function of repeatedly determining the current position of the carriage relatively to the track. In case the lubrication module includes an acceleration sensor for measuring an acceleration of a reference object being one of the carriage and the track, wherein the position determination module is for repeatedly determining the current position of the carriage relatively to the track based on acceleration data obtained by the acceleration sensor, then the position determination module can for example be included in the acceleration sensor. In case the lubrication arrangement comprises a reference position detection unit for detecting and accordingly providing a reference position signal when the reference object passes a reference position relative to the other one of the carriage and the track than the reference object, then the position determination module can for example be included in the reference position detection unit.

The solution of the invention is furthermore a linear guiding device including a track, a carriage which is movable along the track and a lubrication arrangement according to the invention. Thereby, the carriage is advantageously moveable along the track. This means preferably that the carriage is moveable relatively to the track to different positions along the track. Thus, the carriage being movable along the track preferably includes the carriage being movable while the track is fixed, the track being movable while the carriage is fixed, and both the carriage and the track being movable. In a preferred variant, the carriage is mountable onto the track to be movable along the track along a movement path.

The solution of the invention is furthermore a method for lubricating a linear guiding device according to the invention, wherein a lubrication of the track of the linear guiding device with a lubricant is controlled with the control unit of the lubrication arrangement of the linear guiding device by regulating a flow of the lubricant from the lubricant nozzle of the lubrication arrangement in dependence of a current position of the carriage of the linear guiding device relatively to the track.

Since according to the invention, the current position of the carriage relatively to the track is taken into account by the control unit for controlling the lubrication of the track, a lubrication of the track depending on the position of the carriage relatively to the track is enabled. This allows for an appropriate lubrication of the linear guiding device without wastage of lubricant and spilling of excess lubricant to places where no lubricant should get to.

In the context of the present text, the term "linear guiding device" refers to a device including a carriage and a track, wherein the carriage is movable along the track. When the carriage moves along the track, it follows a movement path along the track. In order to guide this movement of the carriage along the movement path, the carriage is preferably mounted to the track. Thus, the carriage is preferably movably mounted to the track. Then attaching the track to a first object and attaching a second object to the carriage, the first object can be moved relatively to the second object. Consequently, the linear guiding device can be used to move one object relatively to another object along the movement path. This movement path can be described as a line. This line however is not required to be a straight line. It can be a straight line. But it can as well consist of bents or it can even comprise straight sections and bended sections. Thus, the track does not necessarily follow a straight line but can comprise bents or even consist of one or several bents.

Preferably, the lubrication arrangement includes an acceleration sensor for measuring an acceleration of a reference object being one of the carriage and the track, wherein the position determination module is for repeatedly determining the current position of the carriage relatively to the track based on acceleration data obtained by the acceleration sensor by measuring the acceleration of the reference object.

The acceleration sensor has the advantage that the current position of the carriage relatively to the track can be determined in a simple way without requiring to arrange an array of complex position detection sensors along the track and without having to connect the lubrication arrangement to any control unit or control circuitry of the linear guiding device for receiving position data indicating the current position of the carriage relatively to the track from a control system of the linear guiding device. Thus, the acceleration sensor enables to construct the lubrication arrangement as a separate unit and thus autarkic unit with which the linear guiding device can be upgraded.

In case the lubrication arrangement includes an acceleration sensor, the acceleration sensor is advantageously arranged to measure the acceleration of the reference object being a moving object. Thus, in an advantageous variant, only the reference object is moved when operating the linear guiding device, while the other one of the carriage and the track than the reference object is not moved. In case both the carriage and the track are moved when operating the linear guiding device, then the lubrication arrangement preferably includes two acceleration sensors, wherein one of the two acceleration sensors is for measuring the acceleration of the carriage while the other one of the two acceleration sensors is for measuring the acceleration of the track. In this case, the current position of the carriage relatively to the track is advantageously determined by the position determination module based on the acceleration data obtained by the two acceleration sensors. In this case, the two accelerations sensor may contain any one or any combination of the features described herein for the embodiment with one acceleration sensor.

Alternatively, the lubrication arrangement goes without an acceleration sensor.

In case the lubrication arrangement includes the acceleration sensor for measuring the acceleration of the reference object being one of the carriage and the track, wherein the position determination module is for repeatedly determining the current position of the carriage relatively to the track based on acceleration data obtained by the acceleration sensor, then the acceleration sensor is preferably an accelerometer measuring an acceleration of the accelerometer in an own instantaneous rest frame of the accelerometer for measuring the acceleration of the reference object. This means, in operation of the linear guiding device comprising the lubrication arrangement, the acceleration sensor is advantageously arranged on the reference object for measuring the acceleration of the reference object. This has the advantage that the lubrication arrangement can be constructed as a separate unit and thus autarkic unit with which the linear guiding device can be upgraded without requiring to connect to lubrication arrangement to a control system of the linear guiding device for obtaining position data indicating the current position of the carriage.

Alternatively, the acceleration sensor is a different type of sensor for measuring the acceleration of the reference object. For example, the acceleration sensor may rely on a laser measuring a varying distance to a reference point. In this case, the acceleration sensor may be arranged on the reference object while the reference point is arranged on the other one of the carriage and the track than the reference object.

Independent of the type of acceleration sensor, the acceleration is preferably measurable with the acceleration sensor at an acceleration sampling rate of at least 500 Hz. This has the advantage that the acceleration data provided by the acceleration sensor is sufficiently detailed to enable a precise determination of the current position of the carriage which enables a well controlled lubrication of the track.

Alternatively, the acceleration sampling rate is lower than 500 Hz.

Preferably, the current position is determinable with the position determination module at a position sampling rate of at least 500 Hz. This has the advantage that a well controlled lubrication of the track is enabled.

Alternatively however, the position sampling rate is lower than 500 Hz.

Particularly advantageous, the position sampling rate is a same rate as the acceleration sampling rate. This has the advantage that in view of the given position sampling rate, the current position of the carriage can be determined with maximal reliability and precision since the acceleration sampling rate is the same rate as the position sampling rate.

Alternatively, the position sampling rate is a different rate than the acceleration rate. In an example, the acceleration rate is an integer multiple of the position sampling rate.

Advantageously, the lubrication arrangement includes a zero-point filter for filtering the acceleration data to provide a no-movement-value in the acceleration data when the reference object is not moving. Thus, a signal noise in the acceleration data provided by the acceleration sensor is avoided when the reference object is not moving. Consequently, the acceleration data is much cleaner such that, when the reference object is not moving while the current position of the carriage relatively to the track is repeatedly determined by the position determination module, the determined current position is maintained and not unintentionally shifted. Consequently, the overall determination of the current position is more precise, enabling a better controlled lubrication of the track.

In a first preferred variant, the zero-point filter is included in the acceleration sensor. In a second preferred variant, the zero-point filter is included in the control unit. In a third variant, the zero-point filter is a separate unit connected to the acceleration sensor for receiving the acceleration data from the acceleration sensor for zero-filtering the acceleration data, wherein the zero-point filter is connected to the control unit for providing the filtered acceleration data to the control unit. In either variant, the position determination module is advantageously arranged after the zero-point filter for receiving the filtered acceleration data.

Alternatively, the lubrication arrangement goes without such a zero-point filter.

Independent of whether the lubrication arrangement includes an acceleration sensor or not and independent of whether the lubrication arrangement includes a zero-point filter or not, the lubrication arrangement advantageously includes a reference position detection unit for detecting and accordingly providing a reference position signal when the reference object passes a reference position relative to the other one of the carriage and the track than the reference object. This has the advantage that each time the reference object passes the reference position, the lubrication arrangement receives precise information on the position of the carriage relative to the track. Consequently, this enables a repeated calibration of the lubrication arrangement during operation of the linear guiding device.

Preferably, the lubrication arrangement includes a calibration module for calibrating the current position by setting the current position to a value corresponding to the reference position when the reference position signal is provided by the reference position detection unit. This has the advantage that the lubrication arrangement is repeatedly calibrated during operation of the linear guiding device.

The calibration module can be included in the reference position detection unit, in the control unit or can be a unit separate from the reference position detection unit and the control unit. In either case, the calibration module can be included in the position determination module or can be separate from the position determination module.

Alternatively, the lubrication arrangement goes without such a calibration module.

Advantageously, the reference position detection unit is an inductive sensor for detecting passage of a zero point marking and for providing the reference position signal when the passage of the zero point marking is detected. This has the advantage that a simple and reliable way of detection of the reference position is enabled.

Alternatively, the reference position detection unit is not an inductive sensor. In one example of such an alternative, the reference position detection unit is a mechanical sensor for mechanically detecting passage of a zero point marking by being touched by the zero point marking upon passage of the zero point marking, wherein the mechanical sensor is for providing the reference position signal when the passage of the zero point marking is detected.

Alternatively, the lubrication arrangement goes without reference position detection unit.

In a first preferred variant, the lubricant arrangement includes an energy supply connector for connecting the lubricant arrangement to an energy source for suppling the lubricant arrangement with energy for operation the lubricant arrangement. This energy source may for example be an energy supply provided on the carriage of the linear guiding device for supplying any device mounted on the carriage with energy.

In a second preferred variant, the lubricant arrangement includes a battery or accumulator for supplying the lubricant arrangement with energy for operating the lubricant arrangement.

Both variants have the advantage that the lubricant arrangement can easily be constructed and operated as an autarkic unit. Consequently, the lubricant arrangement can be produced and marketed as a separate device with which a pre-existing linear guiding device can be upgraded in an easy and simple manner.

In the linear guiding device according to the invention, the lubricant nozzle of the lubrication arrangement is preferably arranged on the carriage. This has the advantage that since the carriage is movable along the track, the lubrication nozzle is moved along the track, too. Thus, an optimal distribution of the lubricant along the track is enabled.

Alternatively, the lubricant nozzle is not arranged on the carriage. In one example of such an alternative, the lubricant arrangement comprises several lubricant nozzles which are arranged along the track of the linear guiding device. In this case, the control unit of the lubrication arrangement is advantageously for controlling the lubrication of the track with the lubricant by regulating the flow of the lubricant from the several lubricant nozzles.

Advantageously, the track comprises a toothed rack and the carriage comprises a pinion running in the toothed rack. This has the advantage that a reliable movement of the carriage along the track is enabled even in case heavy loads are mounted to the carriage and moved with the carriage.

In a preferred variant, the lubricant nozzle is a lubrication pinion. Particular preferably, the lubrication pinion provides a lubricant passage in its axle for supplying the lubrication pinion with lubricant. Furthermore, the lubrication pinion advantageously comprises pinion teeth made from a porous foam material for storing and releasing lubricant when running in the toothed rack. An example of such a porous foam material is a polyurethane foam. This preferred variant has the advantage that an even distribution of the lubricant along the toothed rack is enabled.

In a variant however, the lubricant nozzle is not a lubrication pinion.

Alternatively to these variants, the track goes without toothed rack and the carriage goes without a pinion running on the toothed rack.

In a preferred variant, the carriage comprises a wheel running on the track. Such a variant has the advantage that a movement of the carriage along the track with comparably little friction is enabled.

In this case, in a preferred variant, the lubricant nozzle is a lubrication wheel. Particular preferably, the lubrication wheel provides a lubricant passage in its axle for supplying the lubrication wheel with lubricant. Furthermore, the lubrication wheel advantageously comprises a running surface made from a porous foam material for storing and releasing lubricant when running on the track. An example of such a porous foam material is a polyurethane foam. This preferred variant has the advantage that an even distribution of the lubricant along the track is enabled.

In a variant however, the lubricant nozzle is not a lubrication wheel.

Advantageously, in the linear guiding device, the acceleration sensor of the lubrication arrangement is arranged on the carriage. This has the advantage that the acceleration sensor can be an accelerometer measuring an acceleration of the accelerometer in the own instantaneous rest frame of the accelerometer for measuring the acceleration of the reference object being the carriage. Furthermore, this has the advantage that in case the lubrication nozzle, the control unit, the position determination module and the other potential parts of the lubrication arrangement like the zero-point filter, the reference position detection unit and the calibration unit as well as the lubricant reservoir and the battery or accumulator are arranged on the carriage, too, the lubrication arrangement can easily be constructed as an autarkic unit with which any linear guiding device can be upgraded.

In the method according to the invention for lubricating a linear guiding device, an acceleration of a reference object being one of the carriage and the track is advantageously measured with the acceleration sensor of the lubrication arrangement, wherein the current position of the carriage relatively to the track is determined from the acceleration by the position determination module of the lubrication arrangement. This has the advantage that the current position of the carriage relatively to the track can be determined in a simple way without requiring to arrange an array of complex position detection sensors along the track and without having to connect the lubrication arrangement to any control unit or control circuitry of the linear guiding device for receiving position data indicating the current position of the carriage relatively to the track from a control system of the linear guiding device. Thus, constructing the lubrication arrangement as a separate unit and thus as an autarkic unit with which the linear guiding device can be upgraded is enabled.

Alternatively, the current position of the carriage relatively to the track is determined directly and not based on a measurement of an acceleration.

Preferably, the track is divided into first virtual segments, wherein from the current position and earlier current positions of the carriage, it is determined whenever the carriage has entered one of the first virtual segments, wherein a number of entrance times which the carriage has entered the respective one of the first virtual segments since a last lubrication of the respective one of the first virtual segments is counted, wherein in case the number of entrance times corresponds to a threshold number, the flow of the lubricant from the lubricant nozzle is started for lubricating the track in the respective one of the first virtual segments. Thereby, the determination of the number of entrance times and the starting of the flow of the lubricant nozzle are advantageously executed and controlled by the control unit. This has the advantage that the track is lubricated depending on the number of times the carriage has passed the respective one of the first virtual segments and thus the respective part of the track. Thereby, the first virtual segments can be longer segments of the track or can be very short segments. Furthermore, the first virtual segments can all have a same length or can have different lengths.

In one example, where the carriage frequently moves in a particular section of the track and only moves occasionally in another section of the track, the another section can be covered by one long first virtual segment, while the particular section where the carriage frequently moves can be divided in multiple first virtual segments which are shorter than the one long first virtual segment.

In a preferred variant, to each first virtual segment, an individual threshold number is assigned. Thereby, the individual threshold numbers can be the same or can differ from each other. This has the advantage that the lubrication of the first virtual segments can be controlled individually. In the before mentioned example where the carriage frequently moves in a particular section of the track and only moves occasionally in another section of the track and where the another section is covered by one long first virtual segment while the particular section where the carriage frequently moves is divided in multiple first virtual segments which are shorter than the one long first virtual segment, a threshold number of 1 can be assigned to the long first virtual segment while a threshold number being larger than 1 can be assigned to the shorter first virtual segments.

Assigning to each first virtual segment an individual threshold number has the further advantage that sections of the track where the carriage has to carry stronger loads than in other sections of the track can be lubricated more than these other sections of the track.

In another variant, a same threshold number is used for all virtual segments.

As an alternative to these variants, the number of entrance times which the carriage has entered a respective one of the first virtual segments since a last lubrication of the respective one of the first virtual segments is not counted.

Advantageously, the track is divided into second virtual segments, wherein from the current position of the carriage and earlier current positions of the carriage, it is determined whenever the carriage has entered one of the second virtual segments, wherein a time when the carriage has entered the respective one of the second virtual segments is recorded, wherein in case the carriage has entered the respective one of the second virtual segments a longer time ago than a threshold time, the flow of the lubricant from the lubricant nozzle is started for lubricating the track in the respective one of the second virtual segments. Thereby, the recording of the time when the carriage has entered the respective one of the second virtual segments and the starting of the flow of the lubricant nozzle are advantageously executed and controlled by the control unit. This has the advantage that the track is lubricated depending on the time passed since the carriage has passed the respective one of the second virtual segments and thus the respective part of the track for the last time. Thereby, the second virtual segments can be longer segments of the track or can be very short segments. Furthermore, the second virtual segments can all have a same length or can have different lengths.

In one example, where the carriage frequently moves in a particular section of the track and only moves occasionally in another section of the track, the another section can be covered by one long second virtual segment, while the particular section where the carriage frequently moves can be divided in multiple second virtual segments which are shorter than the one long second virtual segment.

In a preferred variant, to each second virtual segment, an individual threshold time is assigned. Thereby, the individual threshold times can be the same or can differ from each other. This has the advantage that the lubrication of the second virtual segments can be controlled individually. In the before mentioned example where the carriage frequently moves in a particular section of the track and only moves occasionally in another section of the track and where the another section is covered by one long second virtual segment while the particular section where the carriage frequently moves is divided in multiple second virtual segments which are shorter than the one long second virtual segment, a longer threshold time can be assigned to the long second virtual segment while a shorter threshold time can be assigned to the shorter second virtual segments.

Assigning to each second virtual segment an individual threshold time has the further advantage that sections of the track where the carriage has to carry stronger loads than in other sections of the track can be lubricated more than these other sections of the track.

In a preferred variant, the track is divided into first virtual segments, wherein from the current position and earlier current positions of the carriage, it is determined whenever the carriage has entered one of the first virtual segments, wherein the number of entrance times which the carriage has entered the respective one of the first virtual segments since the last lubrication of the respective one of the first virtual segments is counted, wherein in case the number of entrance times corresponds to the threshold number, the flow of the lubricant from the lubricant nozzle is started for lubricating the track in the respective one of the first virtual segments, while additionally, the track is divided into second virtual segments, wherein from the current position of the carriage and earlier current positions of the carriage, it is determined whenever the carriage has entered one of the second virtual segments, wherein the time when the carriage has entered the respective one of the second virtual segments is recorded, wherein in case the carriage has entered the respective one of the second virtual segments a longer time ago than a threshold time, the flow of the lubricant from the lubricant nozzle is started for lubricating the track in the respective one of the second virtual segments.

In this case, in a first preferred variant, the first virtual segments are identical to the second virtual segments. This has the advantage that the threshold number or, if applicable, the individual threshold numbers assigned to the first virtual segments, can be chosen to match the threshold time or, if applicable. The individual threshold times assigned to the second virtual segments. In one example of this first preferred variant, the threshold number is the same for all first virtual segments, while the threshold time is the same for all second virtual segments. In this example, the threshold number ensures that in case the carriage frequently enters a particular virtual segment, that particular segment is more often lubricated. At the same time, the threshold time ensures that in case the carriage very rarely enters a particular virtual segment, that particular segment is still lubricated even in cases where the carriage has entered that particular segment only for the first time since the last lubrication.

In a second preferred variant, however, the first individual segments differ from the second virtual segments.

In yet another variant, the track is either divided into first virtual segments, wherein from the current position and earlier current positions of the carriage, it is determined whenever the carriage has entered one of the first virtual segments, wherein the number of entrance times which the carriage has entered the respective one of the first virtual segments since the last lubrication of the respective one of the first virtual segments is counted, wherein in case the number of entrance times corresponds to the threshold number, the flow of the lubricant from the lubricant nozzle is started for lubricating the track in the respective one of the first virtual segments, or, the track is divided into second virtual segments, wherein from the current position of the carriage and earlier current positions of the carriage, it is determined whenever the carriage has entered one of the second virtual segments, wherein the time when the carriage has entered the respective one of the second virtual segments is recorded, wherein in case the carriage has entered the respective one of the second virtual segments a longer time ago than a threshold time, the flow of the lubricant from the lubricant nozzle is started for lubricating the track in the respective one of the second virtual segments.

Alternatively, the track is neither divided into first virtual segments, wherein from the current position and earlier current positions of the carriage, it is determined whenever the carriage has entered one of the first virtual segments, wherein the number of entrance times which the carriage has entered the respective one of the first virtual segments since the last lubrication of the respective one of the first virtual segments is counted, wherein in case the number of entrance times corresponds to the threshold number, the flow of the lubricant from the lubricant nozzle is started for lubricating the track in the respective one of the first virtual segments, nor divided into second virtual segments, wherein from the current position of the carriage and earlier current positions of the carriage, it is determined whenever the carriage has entered one of the second virtual segments, wherein the time when the carriage has entered the respective one of the second virtual segments is recorded, wherein in case the carriage has entered the respective one of the second virtual segments a longer time ago than a threshold time, the flow of the lubricant from the lubricant nozzle is started for lubricating the track in the respective one of the second virtual segments.

Preferably, whenever the carriage passes a reference position, the current position is set to the reference position by a calibration module of the lubrication arrangement. This has the advantage that the lubrication arrangement is repeatedly calibrated during operation of the linear guiding device.

Thereby, advantageously, a reference position detection unit is used for detecting and accordingly providing a reference position signal when the reference object passes the reference position relative to the other one of said carriage and said track than said reference object, wherein whenever the reference position signal is provided by the reference position detection unit, the current position is set to the reference position by the calibration module.

Alternatively, the current position is not set to the reference position by a calibration module of the lubrication arrangement whenever the carriage passes a reference position.

Other advantageous embodiments and combinations of features come out from the detailed description below and the entirety of the claims.

### Brief description of the drawings

The drawings used to explain the embodiments show:
- Fig. 1: a schematic view of a linear guiding device according to the invention, the linear guiding device including a track, a carriage which is movable along the track, and a lubrication arrangement according to the invention, and
- Fig. 2: a schematic view of another linear guiding device according to the invention, the linear guiding device including a track, a carriage which is movable along the track, and another lubrication arrangement according to the invention.

In the figures, the same components are given the same reference symbols.

### Preferred embodiments

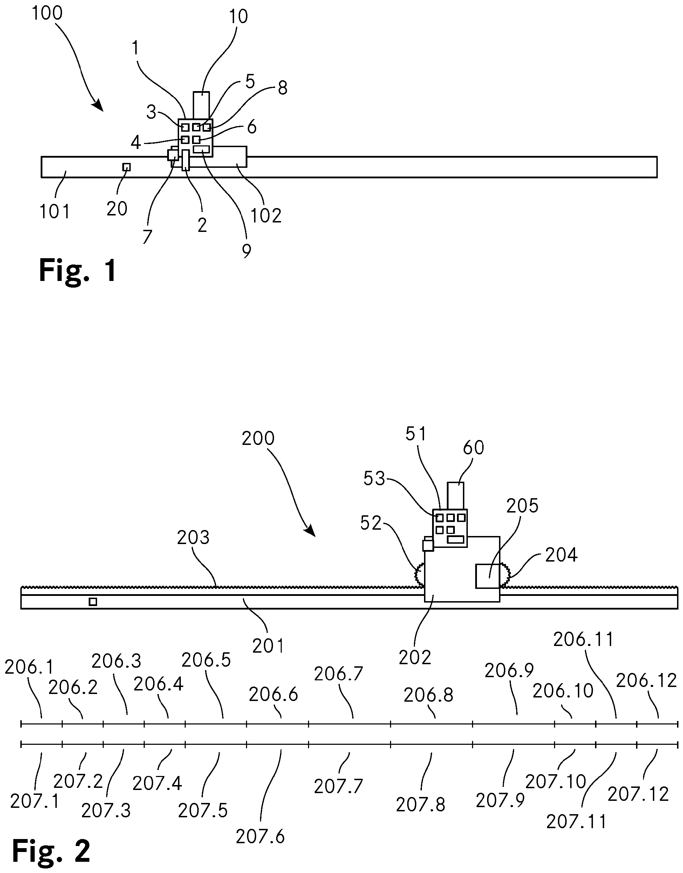

Figure 1 shows a schematic view of a linear guiding device 100 according to the invention, the linear guiding device 100 including a track 101, a carriage 102 which is movable along the track 101, and a lubrication arrangement 1 according to the invention. The lubrication arrangement 1 is an autarkic unit which is arranged on the carriage 102. It is for lubricating the linear guiding device 100 and includes a lubricant nozzle 2 for lubrication the track 101 with a lubricant, a lubricant reservoir 10 for storing the lubricant to be supplied to the lubricant nozzle 2 and a control unit 3 for controlling the lubrication of the track 101 with the lubricant by regulating a flow of the lubricant from the lubricant nozzle 2. Furthermore, the lubrication arrangement 1 includes a position determination module 4 for repeatedly determining a current position of the carriage 102 relatively to the track, wherein the current position of the carriage 102 is taken into account by the control unit 3 for controlling the lubrication of the track 101.

The lubricant nozzle 2 is a valve which is positioned such that lubricant dispensed by the lubricant nozzle 2 is applied to a surface of the track 101 on which the carriage 102 is gliding. Thus, the lubricant nozzle 2 enables lubrication of the track 101 such that the carriage 102 moves smoothly along the track 101. In a variant, the lubricant nozzle 2 is a lubrication wheel. In this variant, the lubrication wheel provides a lubricant passage in its axle for supplying the lubrication wheel with lubricant and comprises a running surface made from a polyurethane foam which is a porous foam material for storing and releasing lubricant when running on the track 101.

The lubrication arrangement 1 shown in Figure 1 additionally includes an acceleration sensor 5 for measuring an acceleration of a reference object being one of the carriage 102 and the track 101. Thereby, the position determination module 4 is for repeatedly determining the current position of the carriage 102 relatively to the track 101 based on acceleration data obtained by the acceleration sensor 5 by measuring the acceleration of the reference object. In the present embodiment shown in Figure 1, the acceleration sensor 5 is an accelerometer measuring an acceleration of the accelerometer in an own instantaneous rest frame of the accelerometer. Thus, since the lubrication arrangement 1 is arranged on the carriage 102, the acceleration sensor 5 measures the acceleration of the carriage 102 which means that the reference object is the carriage 102. In other embodiments however, the acceleration of the track 101 is measured which means that the reference object is the track 101.

The acceleration sensor 5 measures the acceleration at an acceleration sampling rate of 500 Hz. In a variant, the acceleration sampling rate is 1 kHz. In another variant, the acceleration sensor 5 measures the acceleration at an acceleration sampling rate of 1.5 kHz. In another variant, the acceleration sensor 5 measures the acceleration at an acceleration sampling rate of 5 kHz. In yet another variant, the acceleration sensor 5 measures the acceleration at an acceleration sampling rate of 500 Hz.

The position determination module 4 determines the current position of the carriage 102 relatively to the track 101 based on acceleration data obtained by the acceleration sensor 5 at a position sampling rate which is the same rate as the acceleration sampling rate. Thus, the position determination module 4 determines the current position of the carriage 102 relatively to the track 101 at the position sampling rate of 500 Hz. In the before mentioned variants however, the position sampling rate is 1 kHz, 1.5 kHz, 5 kHz and 500 Hz, respectively. In yet another variant, the position sampling rate differs from the acceleration sampling rate.

The lubrication arrangement 1 includes a zero-point filter 6 for filtering the acceleration data to provide a no-movement-value in the acceleration data when the reference object and thus carriage 102 is not moving. Due to the no-movement value in the acceleration data, a signal noise in the acceleration data provided by the acceleration sensor 5 is avoided when the reference object and thus carriage 102 is not moving. Consequently, the acceleration data is much cleaner such that, when the reference object and thus carriage 102 is not moving while the current position of the carriage 102 relatively to the track 101 is repeatedly determined by the position determination module 4, the determined current position is maintained and not unintentionally shifted due to signal noise in the acceleration data.

When the carriage 102 passes a reference position relative to the track 101, the reference object being the carriage 102 passes a reference position relative to the track 101 being the other one of the carriage 102 and the track 101 than the reference object. For detecting this passage, the lubrication arrangement 1 includes a reference position detection unit 7 which provides a reference signal whenever it detects such a passage. In the embodiment shown in Figure 1, this reference position detection unit 7 is an inductive sensor for detecting the passage of a zero point marking 20 arranged on the track 101 and for providing the reference position signal when the passage of the zero point marking 20 is detected.

The lubrication arrangement 1 furthermore includes a calibration module 8 for calibrating the current position by setting the current position to a value corresponding to the reference position when the reference position signal is provided by the reference position detection unit 7. Therefore, each time the carriage 102 passes the reference position, the lubrication arrangement 1 receives precise information on the position of the carriage 102 relative to the track 101. Thus, the lubrication arrangement 1 is repeatedly calibrated during operation of the linear guiding device 100.

As mentioned already, the lubrication arrangement 1 is an autarkic unit which is arranged on the carriage 102. Thereby, the lubricant arrangement 1 includes a battery or accumulator 9 for supplying the lubricant arrangement 1 with energy for operating the lubricant arrangement 1. In a variant, the lubricant arrangement 1 does not include the battery or accumulator 9 but includes an energy supply connector for connecting the lubricant arrangement 1 to an energy source for supplying the lubricant arrangement 1 with energy for operating the lubricant arrangement 1. In one example of this variant, the energy source is provided by the carriage 102 in the form of an energy supply provided on the carriage 102 for supplying any device mounted on the carriage 102 with energy.

Figure 2 shows a schematic view of another linear guiding device 200 according to the invention, the linear guiding device 200 including a track 201, a carriage 202 which is movable along the track 201, and another lubrication arrangement 51 according to the invention. In this embodiment, the track 201 comprises a toothed rack 203 while the carriage 202 comprises a pinion 204 running in in the toothed rack 203. This pinion 204 is actuated with a motor 205 for actuating the movement of the carriage 202 along the track 201.

In most aspects, the lubrication arrangement 51 shown in Figure 2 corresponds to the lubrication arrangement 1 shown in Figure 1. However, in order to lubricate the toothed rack 203 such that the pinion 204 of the carriage 202 runs smoothly on the toothed rack 203, the lubricant nozzle 52 of the lubrication arrangement 51 shown in Figure 2 is a lubrication pinion. This lubrication pinion provides a lubricant passage in its axle for supplying the lubrication pinion with lubricant from the lubricant reservoir 60. Furthermore, the lubrication pinion comprises pinion teeth made from a polyurethane foam which is a porous foam material for storing and releasing the lubricant when running in the toothed rack 203.

In both the lubrication arrangements 1, 51 shown in Figures 1 and 2, the lubrication of the track 101, 201 is controlled by the control unit 3, 53 of the respective lubrication arrangement 1, 51. Thereby, the track 101, 201 is virtually divided into virtual segments and for each virtual segment, a number of entrances of the carriage 102, 202 into the respective virtual segment and a time since the last lubrication of the respective virtual segment is monitored by the control unit 3, 53. Based on this information, the control unit 3, 53 regulates the flow of the lubricant from the lubricant nozzle 2, 52 for controlling the lubrication of the track 101, 201 in the respective virtual segment.

How this monitoring and control of the lubrication works is illustrated in Figure 2. There, in the lower part, the division of the track 202 into first virtual segments 206.1, ... 206.12 and into second virtual segments 207.1, ..., 207.12 is illustrated. Thereby, the first virtual segments 206.1, ... 206.12 have different lengths and the second virtual segments 207.1, ..., 207.12 have different lengths, too. In a variant however, they have the same lengths. In the embodiment shown in Figure 2, the first virtual segments 206.1, ... 206.12 and second virtual segments 207.1, ... 207.12 are the same. In a variant however, they differ from each other.

In either case, the control unit 53 determines whenever the carriage 202 has entered one of the first virtual segments 206.1, ... 206.12 and counts a number of entrance times which the carriage 202 has entered the respective one of the first virtual segments 206.1, ... 206.12 since a last lubrication of the respective one of the first virtual segments 206.1, ... 206.12. In case the number of entrance times corresponds to a threshold number, the flow of the lubricant from the lubricant nozzle 52 is started for lubricating the track 201 in the respective one of the first virtual segments 206.1, ... 206.12 and stopped after some time. In the present case, the threshold number is 20 and the time after which the flow of the lubricant from the lubricant nozzle 52 is stopped is 5 seconds. In variants however, the threshold number can be different. It can be as small as 1 and can by any number, even numbers being considerably larger than 20. Similarly, the time after which the flow of the lubricant from the lubricant nozzle 52 is stopped can differ from 5 seconds. It can be longer and can be shorter. Ideally, the time after which the flow of the lubricant from the lubricant nozzle 52 is stopped depends on the length of the respective first virtual segment 206.1, ... 206.12. In case of a longer first virtual segment 206.1, ... 206.12, the time is longer, while in case of a shorter first virtual segment 206.1, ... 206.12, the time is shorter.

The control unit 53 furthermore determines whenever the carriage 202 has entered one of the second virtual segments 207.1, ... 207.12, and records a time when the carriage 202 has entered the respective one of the second virtual segments 207.1, ... 207.12. In case the carriage 202 has entered the respective one of the second virtual segments 207.1, ... 207.12 a longer time ago than a threshold time, the flow of the lubricant from the lubricant nozzle 52 is started for lubricating the track 201 in the respective one of the second virtual segments 207.1, ... 207.12 and stopped after some time. In the present case, the threshold time is 5 hours and the time after which the flow of the lubricant from the lubricant nozzle 52 is stopped is 5 seconds. In variants however, the threshold number can be different. It can be as small as 1 minute and be much longer like for example in the range of days or even weeks. Similarly, the time after which the flow of the lubricant from the lubricant nozzle 52 is stopped can differ from 5 seconds. Ideally, the time after which the flow of the lubricant from the lubricant nozzle 52 is stopped depends on the length of the respective second virtual segment 207.1, ... 207.12. In case of a longer first virtual segment 207.1, ... 207.12, the time is longer, while in case of a shorter first virtual segment 207.1, ... 207.12, the time is shorter.

The present invention is not limited to the embodiments illustrated and described in the context of the Figures. Other variants and variations of the present invention are readily available to the person skilled in the art.

In summary, it is to be noted that a lubrication arrangement for lubricating a linear guiding device pertaining to the technical field initially mentioned is provided, that enable a well appropriate lubrication of the respective linear guiding device without wastage of lubricant and in a spilling of excess lubricant to places where no lubricant should get. Furthermore, a linear guiding device with such a lubrication arrangement and a method for lubricating such a linear guiding device are provided, too.

## Claims

1. A lubrication arrangement (1, 51) for lubricating a linear guiding device (100, 200), said linear guiding device (100, 200) comprising a track (101, 201) and a carriage (102, 202), wherein said lubrication arrangement (1, 51) includes:
a) a lubricant nozzle (1, 51) for lubricating said track (101, 201) with a lubricant, and
b) a control unit (3, 53) for controlling a lubrication of said track (101, 201) with said lubricant by regulating a flow of said lubricant from said lubricant nozzle (2, 52),
**characterised in that** said lubrication arrangement (1, 51) includes a position determination module (4) for repeatedly determining a current position of said carriage (102, 202) relatively to said track (101, 201), wherein said current position of said carriage (102, 202) relatively to said track (101, 201) is taken into account by said control unit (3, 53) for controlling said lubrication of said track (101, 201).

2. The lubrication arrangement (1, 51) according to claim 1, **characterised in that** said lubrication arrangement (1, 51) includes an acceleration sensor (5) for measuring an acceleration of a reference object being one of said carriage (102, 202) and said track (101, 201), wherein said position determination module (4) is for repeatedly determining said current position of said carriage (102, 202) relatively to said track (101, 201) based on acceleration data obtained by said acceleration sensor (5).

3. The lubrication arrangement (1, 51) according to claim 2, **characterised in that** said acceleration sensor (5) is an accelerometer measuring an acceleration of said accelerometer in an own instantaneous rest frame of said accelerometer for measuring said acceleration of said reference object.

4. The lubrication arrangement (1, 51) according to one of claims 2 or 3, **characterised in that** with said acceleration sensor (5), said acceleration is measurable at an acceleration sampling rate of at least 500 Hz.

5. The lubrication arrangement (1, 51) according to one of claims 2 to 4, **characterised in that** said lubrication arrangement (1, 51) includes a zero-point filter (6) for filtering said acceleration data to provide a no-movement-value in said acceleration data when said reference object is not moving.

6. The lubrication arrangement (1, 51) according to one of claims 1 to 5, **characterised in that** said lubrication arrangement (1, 51) includes a reference position detection unit (7) for detecting and accordingly providing a reference position signal when said reference object passes a reference position relative to the other one of said carriage (102, 202) and said track (101, 201) than said reference object.

7. The lubrication arrangement (1, 51) according to claim 6, **characterised in that** said lubrication arrangement (1, 51) includes a calibration module (8) for calibrating said current position by setting said current position to a value corresponding to said reference position when said reference position signal is provided by said reference position detection unit (7).

8. The lubrication arrangement (1, 51) according to claim 6 or 7, **characterised in that** said reference position detection unit (7) is an inductive sensor for detecting passage of a zero point marking and for providing said reference position signal when said passage of said zero point marking is detected.

9. A linear guiding device (100, 200), including
a) a track (101, 201) and
b) a carriage (102, 202) which is movable along said track (101, 201),
**characterised in that** said linear guiding device (100, 200) includes a lubrication arrangement (1, 51) according to one of claims 1 to 8.

10. The linear guiding device (200) according to claim 9, **characterised in that** said track (201) comprises a toothed rack (203) and **in that** said carriage (202) comprises a pinion (204) running in said toothed rack (203).

11. The linear guiding device (100, 200) according to claim 9 or 10, **characterised in that** said acceleration sensor (5) of said lubrication arrangement (1, 51) is arranged on said carriage (102, 202).

12. A method for lubricating a linear guiding device (100, 200) according to one of claims 9 to 11, **characterised in that** a lubrication of the track (101, 201) of said linear guiding device (100, 200) with a lubricant is controlled with the control unit (3, 53) of the lubrication arrangement (1, 51) of said linear guiding device (100, 200) by regulating a flow of said lubricant from the lubricant nozzle (2, 52) of said lubrication arrangement (1, 51) in dependence of a current position of the carriage (102, 202) of the linear guiding device (100, 200) relatively to said track (101, 201).

13. The method for lubricating a linear guiding device (100, 200) according to claim 12, **characterised in that** an acceleration of a reference object being one of said carriage (102, 202) and said track (101, 201) is measured with the acceleration sensor (5) of said lubrication arrangement (1, 51), wherein said current position of said carriage (102, 202) relatively to said track (101, 201) is determined from said acceleration by the position determination module (4) of said lubrication arrangement (1, 51).

14. The method according to claim 12 or 13, **characterised in that** said track (101, 201) is divided into first virtual segments (206.1, ... 206.12), wherein from said current position and earlier current positions of said carriage (102, 202), it is determined whenever said carriage (102, 202) has entered one of said first virtual segments (206.1, ... 206.12), wherein a number of entrance times which said carriage (102, 202) has entered the respective one of said first virtual segments (206.1, ... 206.12) since a last lubrication of the respective one of said first virtual segments (206.1, ... 206.12) is counted, wherein in case said number of entrance times corresponds to a threshold number, said flow of said lubricant from said lubricant nozzle (2, 52) is started for lubricating said track (101, 201) in the respective one of said first virtual segments (206.1, ... 206.12).

15. The method according to one of claims 12 to 14, **characterised in that** said track (101, 201) is divided into second virtual segments (207.1, ... 207.12), wherein from said current position of said carriage (102, 202) and earlier current positions of said carriage (102, 202), it is determined whenever said carriage (102, 202) has entered one of said second virtual segments (207.1, ... 207.12), wherein a time when said carriage (102, 202) has entered the respective one of said second virtual segments (207.1, ... 207.12) is recorded, wherein in case said carriage (102, 202) has entered the respective one of said second virtual segments (207.1, ... 207.12) a longer time ago than a threshold time, said flow of said lubricant from said lubricant nozzle (2, 52) is started for lubricating said track (101, 201) in the respective one of said second virtual segments (207.1, ... 207.12).

16. The method according to one of claims 12 to 15, **characterised in that** whenever said carriage (102, 202) passes a reference position, said current position is set to said reference position by a calibration module (8) of the lubrication arrangement (1, 51).
